(19) **Europäisches Patentamt / European Patent Office / Office européen des brevets**

(11) **EP 1 561 784 B1**

(12) **EUROPEAN PATENT SPECIFICATION**

(45) Date of publication and mention
of the grant of the patent:
**28.11.2012 Bulletin 2012/48**

(21) Application number: **03769928.7**

(22) Date of filing: **29.10.2003**

(51) Int Cl.:
*C08L 27/12* [(2006.01)]     *C08K 7/06* [(2006.01)]
*B32B 27/30* [(2006.01)]

(86) International application number:
**PCT/JP2003/013812**

(87) International publication number:
**WO 2004/039883 (13.05.2004 Gazette 2004/20)**

(54) **FLUORORESIN COMPOSITION, MOLDED FLUORORESIN ARTICLES, FLUORORESIN LAMINATES AND USE OF THE LAMINATES**

FLUORHARZZUSAMMENSETZUNG, FLUORHARZ-FORMKÖRPER,FLUORHARZ-LAMINATE UND VERWENDUNG DER LAMINATE

COMPOSITION DE RESINE FLUOREE, ARTICLES MOULES DE RESINE FLUOREE ET PRODUITS STRATIFIES DE RESINE FLUOREE AINSI QU'UTILISATION DE CES DERNIERS

(84) Designated Contracting States:
**AT BE BG CH CY CZ DE DK EE ES FI FR GB GR HU IE IT LI LU MC NL PT RO SE SI SK TR**

(30) Priority: **29.10.2002   JP 2002315124**

(43) Date of publication of application:
**10.08.2005   Bulletin 2005/32**

(73) Proprietor: **DAIKIN INDUSTRIES, LTD.**
**Osaka-shi, Osaka 530-8323 (JP)**

(72) Inventors:
• **FUJITA, Eiji,**
**c/o DAIKIN INDUSTRIES, LTD.**
**Settsu-shi, Osaka 566-8585 (JP)**
• **HIGUCHI, Tatsuya,**
**c/o DAIKIN INDUSTRIES, LTD.**
**Settsu-shi, Osaka 566-8585 (JP)**
• **KOMORI, Masaji,**
**c/o DAIKIN INDUSTRIES, LTD.**
**Settsu-shi, Osaka 566-8585 (JP)**

• **NANBA, Mutsusuke,**
**c/o DAIKIN INDUSTRIES, LTD.**
**Settsu-shi, Osaka 566-8585 (JP)**

(74) Representative: **HOFFMANN EITLE**
**Patent- und Rechtsanwälte**
**Arabellastrasse 4**
**81925 München (DE)**

(56) References cited:
| EP-A- 0 008 635 | EP-A- 0 086 639 |
| EP-A- 1 086 962 | WO-A-01/96100 |
| WO-A1-01/60606 | WO-A1-01/96100 |
| JP-A- 2002 254 562 | JP-A- 2002 276 862 |
| JP-A- 2003 192 914 | US-A- 5 593 776 |
| US-A- 5 877 264 | US-A1- 2002 040 090 |
| US-B1- 6 205 016 | |

• **DATABASE WPI Section Ch, Week 198628 Derwent Publications Ltd., London, GB; Class A14, AN 1986-178872 XP002359008 & JP 61 111305 A (TOKUYAMA SODA KK) 29 May 1986 (1986-05-29)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 561 784 B1

**Description**

TECHNICAL FIELD

The present invention relates to a fluororesin composition, a fluorine-containing molded article, a fluorine-based layer-containing laminate and a method of using fluorine-based layer-containing laminates.

BACKGROUND ART

Fluororesins are now in use as piping materials in chemical plants and semiconductor manufacturing equipment, fuel pipes in automobiles, and fixing rolls in OA machines and tools, among others, and electrically conductive fluororesin compositions prepared by incorporating an electrically conductive filler in fluororesins have been used in the case of their continuously contacting with an inflammable substance such as gasoline.

The term "conductive" or "electrically conductive" as used herein means that whereas when an inflammable liquid such as gasoline is continuously contact with such an insulator as a resin, electrostatic charges are accumulated and may possibly cause inflammation, the substance in question has electric characteristics such that those electrostatic charges will not be accumulated and, for example, the SAE (Society of Automotive Engineers) standard J 2260 specifies that the surface resistivity should be not higher than $10^6$ $\Omega/\square$.

Carbonaceous conductive materials such as carbon black and acetylene black have so far been generally used as conductive fillers. For providing fluororesin-made moldings with a sufficient level of conductivity, namely a surface resistance of about $10^6$ $\Omega/\square$, however, it is necessary to add a fairly large amount of such a conductive material.

However, such a high conductive material addition level causes various problems; for example, the melt viscosity will increase and the moldability in the manufacture of fuel piping tubes or the like by melt extrusion will become poor, the moldings obtained may be fragile and stiff, the mechanical strength and mechanical characteristics such as sliding characteristics will become diminished, the elasticity modulus will increase and, in the case of use as tubes or the like, in particular, the flexibility will decrease. Further, there is another problem that the conductive material falls off from the surface of the moldings obtained during the use thereof, impairing the surface smoothness; this is an important problem in particular in those fields of use where liquid chemical-transport pipes and the like are required to be clean, as in semiconductor manufacturing equipment.

Known in the art as conductive materials capable of lowering the resistivity of the moldings obtained even at lowered addition levels are Ketjen black (product of Lion Corporation) and the like (cf. e.g. Hisashi Yamada and Michio Narita: "Conductive carbon black <Ketjen black EC> and rendering resins therewith", published 1988 by Plastics Age Co., Ltd., No. 4, pages 164-170). However, the problems that the decrease in surface resistivity is still slight and the melt viscosity is high remain unimproved.

EP 1 086 962 A and EP 1 270 209 A disclose carbonyl containing fluorinated polymers that may include conductive fillers such as carbon black. WO 01/96100 and EP 1 223 030 A disclose carbon fibrils or carbon nanotubes that can be used in compositions comprising fluorinated polymers.

SUMMARY OF THE INVENTION

In view of the above-discussed state of the art, it is an object of the present invention to provide a fluororesin composition capable of providing moldings obtained therefrom with a sufficient level of conductivity and excellent in moldability/processability as well as moldings excellent in surface smoothness and capable of inhibiting filler particles from falling off.

The invention provides a fluororesin composition according to claim 1 comprising a fluorine-containing ethylenic polymer and a carbon fibril, wherein said fluorine-containing ethylenic polymer is a carbonyl group-containing one and said carbon fibril amounts to 0.3 to 20% by mass relative to the total solid matter of said carbon fibril and said fluorine-containing ethylenic polymer.

The invention also provides a fluorine-containing molded article which comprises the above fluororesin composition.

The invention further provides a fluorine-based layer-containing laminate which has the fluorine-based layer comprising the above fluororesin composition.

DETAILED DISCLOSURE OF THE INVENTION

In the following, the present invention is described in detail.

The fluororesin composition comprises a fluorine-containing ethylenic polymer and a carbon fibril.

The fluorine-containing ethylenic polymer is a carbonyl group-containing one. When the fluorine-containing ethylenic polymer is a carbonyl group-containing one, the ability of the polymer to contact with or the affinity thereof for the carbon fibrils, which are to be described later herein, is presumably improved, so that the polymer can fix the carbon fibrils to increase the mutual contactability of the carbon fibrils as a result of adhesion of molecular chains of the fluorine-containing ethylenic polymer. As a result, the conductivity can presumably be improved. For providing conductivity by addition of carbon fibrils alone, it is considered in the art that it is not always necessary for the carbon fibrils to be in mutual physical contact. It is necessary, however, for the carbon fibrils to be either in physical contact or at least so close to one another as to facilitate the transfer of n electrons, which gives high conductivity to the carbon fibrils, from carbon fibril to carbon fibril.

The terminology "carbonyl group-containing" as used herein means that the polymer in question has a carbon-oxygen double bond or bonds as a part or parts of the chemical structure thereof. The carbon-based divalent group formed by the carbon-oxygen double bond is herein referred to as "carbonyl group". The carbon-oxygen double bond may be a part of a functional group, or the carbon-oxygen double bond itself, as a carbonyl group, may be bound to a carbon atom in the main chain, inclusive of the terminus or termini thereof, or in a side chain of the fluorine-containing ethylenic polymer. The fluorine-containing ethylenic polymer may be one containing a carbonyl group-containing functional group or groups or one having both a carbonyl group or groups itself or themselves and a carbonyl group-containing functional group or groups. The polymer may have one or more carbonyl group-containing functional group species. The carbonyl group-containing functional group may be bound to the main chain, inclusive of the termini thereof, or to a side chain.

The carbonyl group-containing functional group is not particularly restricted but includes, among others, a formyl group, a carboxyl group, haloformyl groups, alkoxycarbonyl groups, an acid anhydride bond [-C(=O)O-C(=O)-], a carbonate group, a carbamoyloxy group [$NH_2$-C(=O)O-], an isocyanato group, an amide group, an imide group [-C(=O)-NH-C(=O)-], a carbamoyl group [$NH_2$-C((=O)-], a urethane bond [-NH-C(=O)O-], a carbamoyloxy group [$NH_2$-C (=O) O-], an oxamoyl group [$NH_2$-C(=O)-C(=O)-] , a succinamoyl group [$NH_2$-C(=O)-$CH_2$-$CH_2$-C(=O)-], and a ureido group [$NH_2$-C (=O)-NH-].

In cases where the carbonyl group constitutes a part of a carbonate group and/or haloformyl group, for instance, the fluorine-containing ethylenic polymer may be any of the following possible ones:

(1) One having a carbonate group or groups alone at a terminus or termini or on a side chain or side chains,
(2) One having a haloformyl group or groups alone at a terminus or termini or on a side chain or side chains, and
(3) One having both a carbonate group or groups and a haloformyl group or groups at a terminus or termini and/or on a side chain or side chains. Among them, those fluorine-containing ethylenic polymers having such a functional group or groups at a terminus or termini thereof are preferred because they will not cause marked deteriorations in the heat resistance, mechanical characteristics and chemical resistance of the fluorine-containing moldings or fluorine-containing laminates finally obtained or because they are advantageous from the productivity and/or cost viewpoint. The functional group or groups is or are not particularly restricted by the level or levels of reactivity thereof but may occur in any of the structures.

The carbonate group mentioned above is a group represented by -OC(=O)O-$R^1$ (wherein $R^1$ represents an organic group). In the above formula, the organic group $R^1$ is, for example, an alkyl group containing 1 to 20 carbon atoms or an ether bond-containing alkyl group containing 2 to 20 carbon atoms and is preferably an alkyl group containing 1 to 8 carbon atoms or an ether bond-containing alkyl group containing 2 to 4 carbon atoms. As preferred examples of the carbonate group, there may be mentioned, among others, -OC(=O)OCH$_3$, -OC(=O)OC$_3$H$_7$, -OC(=O)OC$_8$H$_{17}$, and -OC (=O) OCH$_2$CH$_2$CH$_2$OCH$_2$CH$_3$.

The haloformyl group mentioned above is one represented by -COY (wherein Y represents a halogen atom) and includes -COF, -COCl.

The amide group mentioned above is a group represented by -C(=O)-NR$^2$R$^3$ (wherein R$^2$ represents a hydrogen atom or an organic group and R$^3$ represents an organic group).

The hydrogen atom or atoms bound to the nitrogen atom of the above-mentioned imide group, urethane bond, carbamoyl group, carbamoyloxy group, ureido group, oxamoyl group or other group may be substituted by a hydrocarbon group or groups, for example an alkyl group or groups.

The above-mentioned carbonyl group is preferably one derived from at least one group or bond selected from the group consisting of the formyl group, carboxyl group, alkoxycarbonyl group, haloformyl group, acid anhydride bond, carbonate group, isocyanato group, amide group, imide group, urethane bond and ureido group. The terminology "derived from at least one group or bond selected from the group" means that the carbonyl group is a part of the molecular structure of a group or bond selected from among the functional groups and bonds constituting the above-defined group.

Available as the method of introducing a carbonyl group or groups into the main chain terminus or termini of the fluorine-containing ethylenic polymer is the method which uses a polymerization initiator having at least one carbonyl group-containing functional group or at least one functional group capable of being converted to a carbonyl group, for example a peroxycarbonate or peroxyester. This method is preferred since the carbonyl group introduction is very easy to realize and the level of introduction is also easy to control.

The number of the carbonyl groups mentioned above is 3 to 3,000 per $1 \times 10^6$ main chain carbon atoms. If the number is less than 3 per $1 \times 10^6$ main chain carbon atoms, the affinity for the carbon fibrils, which are to be mentioned later herein, will be poor and the mechanical characteristics of the moldings obtained will be poor in some instances. When it exceeds 3,000 per $10^6$ main chain carbon atoms, foaming, for instance, may readily occur and the possibility of pinhole formation or cracking may arise. A more preferred lower limit is 5, and a still more preferred lower limit is 10, per $10^6$ main chain carbon atoms, and a more preferred upper limit is 1,000, and a still more preferred upper limit is 500 per $10^6$ main chain carbon.

When the above-mentioned number of carbonyl groups per $10^6$ main chain carbon atoms is within the above-specified range, the fluorine-containing moldings obtained hardly allow carbon fibrils to fall off and show a low level of carbon fibril transfer to paper.

The terminology "transfer to paper" as used herein refers to the property of carbon fibrils such that they fall off and adhere to paper when the paper is rubbed with the fluorine-containing molding to be tested.

The carbonyl group content in the fluorine-containing ethylenic polymer can be calculated based on the results of measurement by infrared spectroscopic analysis.

The fluorine-containing ethylenic polymer may contain polymer molecules having no carbonyl group, and it is only necessary that such a number of carbonyl groups that falls within the range mentioned above be contained per $10^6$ main chain carbon atoms in the fluorine-containing ethylenic polymer as a set of polymer molecules.

The species and structure of the fluorine-containing ethylenic polymer can be properly selected depending on the intended use and required performance characteristics of the final product moldings. Preferred among others are, however, those polymers which have a melting point of 120 to 310°C or a glass transition point of 50 to 250°C, and such polymers can retain those excellent characteristics of fluororesins in general. In cases where the fluorine-containing ethylenic polymer is crystalline, the melting point thereof should be taken into consideration and, in the case of a noncrystalline resin, the glass transition point thereof should be taken into consideration.

The fluororesin composition of the invention may comprise two or more fluorine-containing ethylenic polymer species and, in that case, it is desirable that the melting point or glass transition point of each fluorine-containing ethylenic polymer satisfies the conditions mentioned above.

The fluorine-containing ethylenic polymer is a polymer obtained by polymerizing at least one fluorine-containing ethylenic monomer.

The fluorine-containing ethylenic polymer does not include those polymers melt processing of which is substantially difficult, for example tetrafluoroethylene [TFE] homopolymers [TFE homopolymers].

The fluorine-containing ethylenic monomer is a fluorine atom-containing ethylenic monomer.

The fluorine-containing ethylenic monomer is not particularly restricted but includes, among others, TFE, vinylidene fluoride [VdF], chlorotrifluoroethylene [CTFE], vinyl fluoride, hexafluoropropylene [HFP], hexafluoroisobutene, monomers represented by the general formula (II) or (III):

$$CH_2=CX^1(CF_2)_mX^2 \qquad (II)$$

$$CF_2=CX^1OCH_2Rf^1 \qquad (III)$$

[wherein $X^1$ represents a hydrogen or fluorine atom, $X^2$ represents a hydrogen, fluorine or chlorine atom, m represents an integer of 1 to 10, and $Rf^1$ represents $-CF_3$ or $-ORf^2$ ($Rf^2$ representing a perfluoroalkyl group containing 1 to 5 carbon atoms)], and perfluoro(alkyl vinyl) ethers [PAVEs].

The fluorine-containing ethylenic polymer is preferably a polymer having a tetrafluoroethylene unit content of not lower than 40 mole%. A more preferred lower limit is 50 mole%.

The tetrafluoroethylene unit is the chemical structure moiety $[-CF_2-CF_2-]$ derived from one molecule of TFE in the molecular structure of the fluorine-containing ethylenic polymer.

The tetrafluoroethylene unit content is the proportion of the number of occurrences of the tetrafluoroethylene unit mentioned above to the total number of the monomer units derived from all monomers in the molecular chain of the fluorine-containing ethylenic polymer. While the tetrafluoroethylene unit content is to be determined for each molecular chain of the fluorine-containing ethylenic polymer, the numerical value of the tetrafluoroethylene unit content as given herein may refer to the mean of the tetrafluoroethylene unit content values for respective molecules of the fluorine-containing ethylenic polymer as an aggregate of all the molecules thereof.

The fluorine-containing ethylenic polymer is more preferably a copolymer of TFE and at least one perfluoro ethylenic monomer represented by the general formula (I):

$$CF_2=CF-Rf^1 \qquad (I)$$

wherein $Rf^1$ represents $-CF_3$ or $-ORf^2$ and $Rf^2$ represents a perfluoroalkyl group containing 1 to 5 carbon atoms.

The fluorine-containing ethylenic polymer is preferably one obtained by copolymerizing such a fluorine-containing ethylenic monomer or monomers as mentioned above and at least one fluorine-free ethylenic monomer.

The fluorine-free ethylenic monomer is an ethylenic monomer having no fluorine atom.

The fluorine-free ethylenic monomer is preferably selected from among ethylenic monomers containing not more than 5 carbon atoms so that the heat resistance, chemical resistance and other properties may not be deteriorated. The fluorine-free ethylenic monomer is not particularly restricted but includes, among others, ethylene, propylene, 1-butene, 2-butene, vinyl chloride, and vinylidene chloride.

The fluorine-containing ethylenic polymer is preferably a copolymer comprising the following a, b and c: a. 20 to 90 mole% of the tetrafluoroethylene unit, b. 10 to 80 mole% of the ethylene unit and c. 0 to 70 mole% of the perfluoro ethylenic monomer unit derived from a perfluoro ethylenic monomer represented by the above general formula (I).

The ethylene unit content and perfluoro ethylenic monomer unit content given above are to be construed in the same manner as the tetrafluoroethylene unit content mentioned hereinabove and, from the viewpoint of the molecular structure of the fluorine-containing ethylenic polymer, they are respectively the proportions of the numbers of occurrences of the chemical structure moiety $[-CH_2CH_2-]$ derived from one molecule of ethylene and the chemical structure moiety $[CF_2=CF-Rf^1$ ($Rf^1$ being the same as defined above)] derived from one molecule of the perfluoro ethylenic monomer mentioned above relative to the total number of the monomer units derived from all the monomers in the molecular chains of the fluorine-containing ethylenic polymer. While the ethylene unit content or perfluoro ethylenic monomer unit content is to be determined for each molecular chain of the fluorine-containing ethylenic polymer, the numerical value of the ethylene unit content or perfluoro ethylenic monomer unit content as given herein may refer to the mean of the ethylene unit content or perfluoro ethylenic monomer unit content values for respective molecules of the fluorine-containing ethylenic polymer as an aggregate of all the molecules thereof.

In the above-mentioned fluorine-containing ethylenic polymer, the mole% values for the above-mentioned a, b and c are such that the sum of a, b and c amounts to 100 mole%.

The above-mentioned c may comprise one single perfluoro ethylenic monomer species or two or more perfluoro ethylenic monomer species.

The fluorine-containing ethylenic polymer mentioned above is a copolymer of the above-mentioned a, b and c, as mentioned above, and it may also be a product of polymerization of the above-mentioned TFE, ethylene and perfluoro ethylenic monomer, together with a monomer or monomers other than TFE, ethylene and the perfluoro ethylenic monomer.

The above fluorine-containing ethylenic polymer may be one comprising the above-mentioned a and b and free of the above-mentioned c.

The fluorine-containing ethylenic polymer is preferably a polymer having a vinylidene fluoride unit content of not lower than 15 mole%.

The vinylidene fluoride unit is the chemical structure moiety $[-CF_2-CH_2-$ or $-CH_2-CF_2-]$ derived from one VdF molecule in the molecular structure of the fluorine-containing ethylenic polymer.

The above-mentioned "vinylidene fluoride unit content" is the proportion of the number of occurrences of the vinylidene fluoride unit mentioned above to the total number of the monomer units derived from all monomers in the molecular chain of the fluorine-containing ethylenic polymer. While the vinylidene fluoride unit content is to be determined for each molecular chain of the fluorine-containing ethylenic polymer, the numerical value of the vinylidene fluoride unit content as given herein may refer to the mean of the vinylidene fluoride unit content values for respective molecules of the fluorine-containing ethylenic polymer as an aggregate of all the molecules thereof.

Further, the fluorine-containing ethylenic polymer is preferably a copolymer comprising the following d, e and f:

  d. 15 to 60 mole% of the vinylidene fluoride unit,
  e. 35 to 80 mole% of the tetrafluoroethylene unit and
  f. 5 to 30 mole% of the hexafluoropropylene unit.

The hexafluoropropylene unit is the chemical structure moiety $[-CF_2-CF(CF_3)-]$ derived form one molecule of HFP in the molecular structure of the fluorine-containing ethylenic polymer. The hexafluoropropylene unit content mentioned above is the proportion of the number of occurrences of the hexafluoropropylene unit mentioned above to the total number of the monomer units derived from all monomers in the molecular chain of the fluorine-containing ethylenic polymer. While the hexafluoropropylene unit content is to be determined for each molecular chain of the fluorine-containing ethylenic polymer, the numerical value of the hexafluoropropylene unit content as given herein may refer to the mean of the hexafluoropropylene unit content values for respective molecules of the fluorine-containing ethylenic polymer as an aggregate of all the molecules thereof.

In the above-mentioned fluorine-containing ethylenic polymer, the mole% ages of the above-mentioned d, e and f are such that the sum of the d, e and f amounts to 100 mole%.

The fluorine-containing ethylenic polymer is a copolymer comprising the above-mentioned d, e and f, as mentioned above. It may also be a product of polymerization of VdF, TFE and HFP, together with a monomer or monomers other than VdF, TFE and HFP.

The melting point or glass transition point of the fluorine-containing ethylenic polymer can be adjusted by selecting the fluorine-containing ethylenic monomer and fluorine-free ethylenic monomer species, the combination thereof, and the monomer composition, among others. Further, the polymer may be obtained in the form of either a resin or an elastomer through such selections.

The above-mentioned fluorine-containing ethylenic polymer can be obtained by using any of the polymerization methods generally used on a commercial scale. The polymerization method is not particularly restricted but may include, among others, emulsion polymerization, suspension polymerization, solution polymerization, and bulk polymerization. Preferred from the industrial viewpoint, however, is the method comprising suspension polymerization in an aqueous medium using a fluorine-containing solvent and a peroxycarbonate as a polymerization initiator. In such suspension polymerization, the fluorine-containing solvent can be used in admixture with water.

The fluorine-containing solvent to be used in suspension polymerization is, for example, a hydrochlorofluoroalkane, a perfluoroalkane, or a perfluorocycloalkane. The hydrochlorofluoroalkane includes, among others, $CH_3CClF_2$, $CH_3CCl_2F$, $CF_3CF_2CCl_2H$, and $CF_2ClCF_2CFHCl$. The perfluoroalkane includes, among others, $CF_3CF_2CF_2CF_3$, $CF_3CF_2CF_2CF_2CF_3$, and $CF_3CF_2CF_2CF_2CF_2CF_3$. As the perfluorocycloalkane, there may be mentioned perfluorocyclobutane, among others. Among them, perfluoroalkanes are preferred.

The polymerization temperature is not particularly restricted but may be within the range of 0 to 100°C. The polymerization pressure may be properly selected according to the solvent species employed, the amount and vapor pressure thereof, and the polymerization conditions other than the polymerization pressure, for example the polymerization temperature. Generally, however, it may be within the range of 0 to 9.8 MPaG.

In the polymerization to prepare the above-mentioned fluorine-containing ethylenic polymer, any of the chain transfer agents in general use, for example hydrocarbons such as isopentane, n-pentane, n-hexane and cyclohexane; alcohols such as methanol and ethanol; and halogenated hydrocarbons such as carbon tetrachloride, chloroform, methylene chloride and methyl chloride, may be used for molecular weight adjustment.

The fluororesin composition of the invention comprises the above-mentioned fluorine-containing ethylenic polymer and carbon fibril.

The carbon fibrils each is a hollow and fine carbon fiber having a tubular wall consisting of a layer of graphitized and regularly arranged carbon atoms or a gathering of such fibers. The tubular wall may be a graphene monolayer consisting of continuous condensed benzene rings or may comprise two or more graphene layers. The fine carbon fiber generally has a cylindrical form. One single fine carbon fiber is sometimes referred to herein as "fibrous matter". The carbon fibrils are generally those called carbon nanotubes. Employable as the carbon fibrils are, among others, those carbon fibers which are described in U. S. Patent No. 4,663,230, Japanese Kokai Publication H03-174018, Japanese Patent Publication H03-64606 and Japanese Patent Publication H03-77288, for instance.

The carbon fibril is preferably a fibrous matter having an outside diameter of 1 to 1,000 nm and a length (L) in the longitudinal direction-to-outside diameter (D) ratio (L/D) over 5. Those fibrous matters which have an outside diameter smaller than 1 nm are generally difficult to obtain. When the outside diameter exceeds 1,000 nm, the mingling of the carbon fibrils with the fluorine-containing ethylenic polymer may become unfavorably insufficient. A more preferred lower limit is 3 nm, and a more preferred upper limit is 100 nm.

The outside diameter so referred to herein is the value obtained by measurement using a scanning electron microscope (SEM; model S-4000, product of Hitachi, Ltd.).

The carbon fibrils so referred to herein each may comprise a fibrous matter occurring singly or two or more fibrous matters gathered together, or a mixture of these, provided that the fibrous matters as a whole have an outside diameter falling within the above range. The carbon fibrils each may maintain the long and slender shape thereof either partly or as a whole in the form of one single fibrous matter or a gathering of two or more fibrous matters or may occur as a lump like a bit of down as a result of flocculation in the form of one single fibrous matter or a gathering of two or more fibrous matters (such lump-shaped aggregate is hereinafter sometimes referred to as "carbon fibril flocculate"), or may occur as a mixture of these.

The carbon fibrils may comprise the carbon fibril flocculates mentioned above.

When the fibrous matters have a length (L) in the longitudinal direction-to-outside diameter (D) ratio (L/D) over 5, the carbon fibrils can be readily oriented in the finally obtained fluorine-containing moldings and this can lead to uniform expression of the conductivity, shock resistance and other characteristics throughout the moldings. The L/D value is require to over 5 but is generally not higher than 1,000.

The above-mentioned L/D value is the value obtained by measurement using a scanning electron microscope (SEM; model S-4000, product of Hitachi, Ltd.).

The carbon fibril flocculates mentioned above preferably have an average particle diameter of 0.01 to 0.25 mm.

When the average particle diameter exceeds 0.25 mm, the melt viscosity will increase and, therefore, the moldability will become poor, or the conductivity will not become sufficient as compared with the level of addition of the carbon fibrils, or the surface smoothness and mechanical strength, among others, of the finally obtained fluorine-containing moldings may become deteriorated, as the case may be. A more preferred upper limit is 0.20 mm.

The above carbon fibril flocculates preferably have a longest diameter of not greater than 0.50 mm. The average particle diameter of the carbon fibril flocculates so referred to herein is the value obtained by measurement according to the following method. Thus, the sample carbon fibrils are caused to adhere to a pressure-sensitive adhesive double coated tape, superficially gold-coated and observed in 12 fields of view at x50 magnification under a scanning electron microscope (SEM; model S-4000, product of Hitachi, Ltd.). Three microphotographs showing typical sites are employed to determine the average particle diameter.

The carbon fibrils should amount to 0.3 to 20% by mass relative to the sum, on the solid matter basis, of the carbon fibrils and fluorine-containing ethylenic polymer. When the amount is less than 0.3% by mass, the conductivity and other characteristics intrinsic in the carbon fibrils may not be manifested to a satisfactory extent in some cases and, when it exceeds 20% by mass, such amount of the carbon fibrils is excessive, so that the moldability in obtaining fluorine-containing moldings will become deteriorated or the surface smoothness, among others, will be impaired in certain instances. A more preferred lower limit to the content of the carbon fibrils is 0.5% by mass, and a still more preferred lower limit is 1% by mass, relative to the total mass of the carbon fibrils and fluorine-containing ethylenic polymer, and a more preferred upper limit is 15% by mass and a still more preferred upper limit is 10% by mass.

The fluororesin composition of the invention may comprise the fluorine-containing ethylenic polymer and carbon fibrils mentioned above and, further, an inorganic filler other than the carbon fibrils. When the carbon fibrils and the inorganic filler other than the carbon fibril are used in combination, the level of addition of the carbon fibrils can be reduced according to the intended use; for the purpose of providing electric conductivity, for instance, the use, as the above-mentioned inorganic filler, of a conductive filler other than the carbon fibrils makes it possible to economically provide the final product fluorine-containing moldings with a sufficient level of conductivity while reducing the level of addition of the carbon fibrils.

The conductive filler other than the carbon fibrils is not particularly restricted but includes, among others, those conventional carbon fibers which are obtained by using, as raw materials, organic polymer fibers such as cellulose and poloyacrylonitrile; carbonaceous conductive materials such as carbon black and acetylene black, metal fibers, metal powders, and surface-metalized fillers.

As the inorganic filler, there may also be mentioned, for example, talc, mica, clay, glass flakes, glass beads, glass fibers, calcium carbonate, and wollastonite. When these are used, the final product moldings can be improved in mechanical strength and, when they are used as extenders, the proportions of the other components of the fluororesin composition of the invention can be lowered.

When used in the fluororesin composition of the invention, the above-mentioned inorganic filler is preferably used in an amount of 3 to 50% by mass based on the fluororesin composition. When the addition level is lower than 3% by mass, the effects of the addition of the inorganic filler may be unsatisfactory in some cases and, when it exceeds 50% by mass, the final product moldings tend to be fragile and hard and the inorganic filler tends to fall off during the use of the moldings. A more preferred lower limit is 5% by mass, and a more preferred upper limit is 40% and a still more preferred upper limit is 30% by mass.

The fluororesin composition of the invention may occur as a mixed powder resulting from mechanical mixing, in a Henschel mixer or a like mixer, of the fluorine-containing ethylenic polymer and carbon fibrils, if desired together with an inorganic filler other than the carbon fibrils, or as pellets obtained by melt mixing the mixed powder using a twin-screw extruder or the like.

The mechanism by which the fluororesin composition of the invention can provide the moldings obtained therefrom with a sufficient level of conductivity and of surface smoothness are not clear but presumably as follows.

Thus, since the fluorine-containing ethylenic polymer has carbonyl groups, the ability thereof to contact with the carbon fibrils is high and, when the polymer molecule chains of the fluorine-containing ethylenic polymer are oriented in the step of molding, the carbon fibrils are also oriented with ease in accordance with the orientation of those polymer molecule chains. Owing to the above-mentioned mechanism of orientation of the carbon fibrils, the conductivity can presumably be increased even when the addition level of the carbon fibrils or the conductive filler other than the carbon fibrils, which is used if desired, is low. The fluororesin composition of the invention can also presumably provide the moldings obtained therefrom with improved surface smoothness as a result of the reduction in carbon fibril flocculate content in the moldings owing to the above-mentioned mechanism of orientation of the carbon fibrils.

Since the level of addition of the carbon fibrils in the fluororesin composition of the invention can be reduced, as mentioned above, the increase in melt viscosity of the fluororesin composition is slight and, therefore, the moldability is improved, so that the strength and elongation characteristics of the fluorine-containing moldings obtained therefrom can probably be inhibited from deteriorating.

The fluororesin composition of the invention can facilitate the carbon fibrils to be straightened to a long and slender state owing to the above-mentioned mechanism of orientation of the carbon fibrils so that the carbon fibrils can be satisfactorily entangled with the molecular chains of the fluorine-containing ethylenic polymers. As a result, the moldings obtained hardly allow the carbon fibrils to fall off from the moldings and, even in the field of applications where mechanical friction due to sliding, for instance, is inevitable, the fall off of the carbon fibrils in the course of use of the moldings is slight. Such fluororesin composition of the invention is suited for use in manufacturing moldings required of having no potential for contaminating the contents of chemical-transport tubes in semiconductor manufacturing equipment and, further, suited for use in manufacturing moldings for sliding use, for example fixing rolls in OA machines and equipment, by utilizing the low level of carbon fibril transfer to paper.

The fluorine-containing molded article characterized in that it is formed of the above fluororesin composition also constitutes one aspect of the present invention.

The fluorine-containing molded article can be obtained by molding or forming by any of the processing methods known in the art. As the known methods of processing, there may be mentioned, for example, such methods of molding as melt extrusion molding, compression molding, calender molding, and injection molding, immersion with a dispersion of the fluororesin composition, and cast film process.

The above-mentioned fluorine-containing molded article is preferably one to be brought into contact with a liquid when it is used thereof.

The field of application of the fluorine-containing molded article is not particularly restricted but includes, among others, piping tubes for coatings, fuel piping tubes (hoses) for use in the automobile industry, food-conveying sheets, transport tubes for drinks and liquid foods, coatings, chemical-transport tubes for use in semiconductor manufacturing equipment, and fixing rolls in OA machines and equipment. Among them, piping tubes for coatings, transport tubes for drinks and liquid foods, chemical-transport tubes and fuel piping tubes for automobiles are preferred.

The fluorine-based layer-containing laminate characterized in that it comprises a fluorine-based layer comprising the fluororesin composition of the invention also constitutes another aspect of the present invention.

The fluorine- based layer mentioned above is not particularly restricted provided that it comprises the above-mentioned fluororesin composition. As such, however, there may generally be mentioned moldings obtained by molding the above fluororesin composition or sheets or the like obtained by cutting or slicing those moldings.

The fluorine-based layer-containing laminate is not particularly restricted provided that it comprises the above-mentioned fluorine-based layer. As the layer or layers other than the fluorine-based layer, there may generally be mentioned resin moldings or sheets or the like obtained by cutting or slicing those moldings. The laminate may have a two-layer laminate structure including the fluorine-based layer or a three- or further multilayer laminate structure.

The fluorine-based layer-containing laminate may be one obtained by separately preparing the fluorine-based layer and the layer(s) other than the fluorine-based layer and bonding them together by contact bonding with heating, for instance. Preferred from the interlaminar bonding and/or process simplification viewpoint, in particular, is, however, the one obtained by the coextrusion molding technique, namely by melting the fluorine-based layer and the layer(s) other than the fluorine-based layer and simultaneously extruding them for laminate formation.

The field of application of the fluorine-based layer-containing laminate is not particularly restricted but includes the same fields of application as mentioned above referring to the fluorine-containing molded article and, in particular, the laminate can be properly used as a fuel piping tube. For use as a fuel piping tube, the fluorine-based layer-containing laminate preferably comprises the above-mentioned fluorine-based layer and a polyamide resin layer(s) as the layer(s) other than the fluorine-based layer, and such molded article is preferably a laminate produced by the coextrusion molding technique.

For use in those fields in which the best use is to be made of the general characteristics of a fluororesin, for example the liquid chemical resistance and nonstickiness, which are to be manifested when the fluororesin is in contact with other materials than the fluorine-based layer-containing laminate or with some medium, the fluorine-based layer-containing laminate preferably has the fluorine-based layer as a most superficial layer. Thus, for example, the fuel piping tube mentioned above preferably has the fluorine-based layer as the most superficial layer.

The fluorine-based layer of the fluorine-based layer-containing laminate is preferably one to come into contact with a liquid when it is used thereof.

The above-mentioned fluorine-based layer-containing laminate, which comprises the fluorine-based layer, as mentioned above, is suited for use in particular in the presence of a liquid-form chemical when the fluorine-based layer is the most superficial layer. When the fluorine-based layer-containing laminate is used, with the fluorine-based layer as the most superficial layer, in the presence of a liquid-form chemical, the fluorine-based layer, even if it is used in contact with the liquid-form chemical, will not allow the carbon fibrils to fall off, as explained hereinabove, hence will not contaminate the liquid-form chemical and, further, the fluorine-based layer-containing laminate can be prevented from deterioration or cracking owing to the chemical resistance which fluororesins have in general. The liquid-form chemical is not particularly restricted but includes various chemical treatment agents or spent chemicals, among others. As the fluorine-based layer-containing laminate to be used in the presence of a liquid-form chemical, there may be mentioned the above-mentioned liquid chemical-transport tubes in semiconductor manufacturing equipment, and piping tubes and lining materials in chemical plants.

The fluorine-based layer-containing laminate preferably includes piping tubes for coating compositions, transport tubes for drinks and liquid foods, liquid chemical-transport tubes, and fuel piping tubes in automobiles.

The method of using the fluorine-based layer-containing laminate which comprises using the fluorine-based layer-containing laminate in the presence of a liquid chemical and is characterized in that the liquid chemical comes into contact with the fluorine-based layer also constitutes a further aspect of the present invention.

## BEST MODES FOR CARYYING OUT THE INVENTION

The following examples illustrate the present invention in more detail. Various parameter measurements were carried out as described below. (1) Determination of the number of carbonate groups in each fluorine-containing ethylenic polymer

Each of the fluorine-containing ethylenic polymers obtained in Synthesis Examples 1 to 7, in the form of a white powder or pieces cut off from melt-extruded pellets, was compression-molded at room temperature to give a film with a thickness of 0.05 to 0.2 mm. This film was subjected to infrared spectroscopic analysis, when a peak due to the carbonyl group of a carbonate group (-OC(=O)O-) appeared at the absorption wavelength of 1809 cm$^{-1}$ ($\nu_{c=o}$). The absorbance of that peak was measured. The number (N) of carbonate groups per $10^6$ main chain carbon atoms was calculated according to the formula (IV):

$$N = 500AW/\varepsilon df \qquad (IV)$$

A: Absorbance of the carbonate group (-OC(=O)O-)-due $\nu_{c=o}$ peak;
$\varepsilon$: Molar extinction coefficient of the carbonate group (-OC(=O)O-) due $\nu_{C=O}$ peak [1·cm$^{-1}$·mol$^{-1}$]; estimated at $\varepsilon$ = 170 based on the data on a model compound;
W: Average monomer unit molecular weight calculated based on the monomer composition;
d: Density of the film [g/cm$^3$] ;
f: Thickness of the film [mm].

The infrared spectroscopic analysis was carried out using a Perkin-Elmer model 1760X FT-IR spectrometer (product of Perkin-Elmer) with 40 repetitions of scanning. The absorbance of the peak at 1809 cm$^{-1}$ was determined from the thus-obtained IR spectrum while the baseline was automatically judged by means of Perkin-Elmer Spectrum for Windows Ver. 1.4C. The film thickness was measured with a micrometer.

(2) Determination of the number of other carbonyl groups in each fluorine-containing ethylenic polymer

Each film obtained in the same manner as described above under (1) was subjected to infrared spectroscopic analysis, and the absorbance of the $\nu_{C=O}$ peak due to stretching vibration of a carbonyl group as found at 1500 to 1900 cm$^{-1}$ was measured. And, using the molar extinction coefficient of the $\nu_{C=O}$ peak as estimated from the data concerning a model compound, the number of occurrences of each carbonyl group species was determined in the same manner as described above under (1) using the formula (IV). The molar extinction coefficient of the fluoroformyl group was estimated at 600, the molar extinction coefficient of the amide group at 940, and the molar extinction coefficient of other carbonyl groups at 530. Because of the possibility of peaks overlapping, $^{19}$F-NMR analysis was carried out in parallel.

(3) Composition analysis of each fluorine-containing ethylenic polymer

Quantification was made based on the results of the $^{19}$F-NMR analysis.

(4) Melting point (Tm) determination

Using a Seiko model DSC apparatus, the melting peak was recorded while the temperature was raise at a rate of 10°C/minute. The temperature corresponding to the maximum value was taken as the melting point (Tm).

(5) MFR (melt flow rate) determination

The mass (g) of each resin composition allowed to flow out through a nozzle with a diameter of 2 mm and a length of 8 mm for a unit time (10 minutes) under a load of 5 kg at a predetermined temperature was measured using a melt indexer (product of Toyo Seiki Seisakusho, Ltd.).

The fluidity data shown in Table 2 are the values calculated using the formula (V) given below:

$$\text{Fluidity} = \frac{\text{(MFR of a resin composition filled with a conductive filler)}}{\text{(MFR of the fluorine-containing ethylenic polymer as a raw material)}} \quad \text{(V)}$$

(6) Surface resistivity measurement

In the case of a powder or pellets, a stick, at least 8 cm in length, is cut out from the straight strand, about 2 mm in diameter, obtained in the MFR measurement, terminals were brought into contact with the stick surface at a distance of 7 cm, and the surface resistivity was measured using an Advantest Corporation model R8340A digital extra-high resistance/microammeter (digital electrometer). The measurement was carried out after allowing the sample for measurement to stand in an atmosphere maintained at a temperature of $25 \pm 2°C$ and a relative humidity of $60 \pm 5\%$ for at least 8 hours. In the case of a multilayer tube, the measurement was carried out according to the method described in SAE J 2260.

(7) Tensile characteristics of each resin composition

Using pellets of each resin composition, a uniform sheet, 0.15 to 0.2 mm in thickness, was prepared by carrying heat pressing at the MFR measurement temperature. And, five Type 5 dumbbell test specimens according to ASTM D 638 were prepared by punching out from the sheet. Then, tensile testing was carried out using a Tensilon universal testing machine at a rate of pulling of 50 mm/minute, and the tensile strength and tensile elongation were determined each as the mean of 5 data.

(8) Multilayer tube adhesion strength measurement

A test piece, 1 cm in width, was cut out from each tube and subjected to a 180° peeling test on a Tensilon universal testing machine at a rate of 25 mm/minute, and the interlaminar bond strength was determined as the mean of 5 maximum points on an elongation-tensile strength graph.

(9) Paper passage testing

A pair of two rolls manufactured from a tube produced from the same resin composition was heated to 180°C, and 10,000 commercial A4 size copy paper sheets were passed between the pair of heating rolls under a pressure of 0.2 MPa at a rate of 20 sheets/minute.

(10) Transfer to paper

Pellets of each resin composition were preheated at 265°C for 30 minutes and then compression molded under a pressure of 5 MPa to give a fluorine-containing molded article with a diameter of 120 mm and a thickness of 1.5 mm, which was rubbed against a plain paper sheet. The surface of the plain paper sheet was observed by the eye and evaluated according to the following criteria:

O: No traces of filler transfer were observed;
$\Delta$ : Filler-derived faint black lines were observed;
X: Filler-derived black lines were observed.

Synthesis Example 1 Synthesis of fluorine-containing ethylenic polymer F-A

An autoclave was charged with 380 L of distilled water and, after thorough nitrogen substitution, 166 kg of perfluorocyclobutane, 80 kg of hexafluoropropylene and 0.4 kg of perfluoro (1,1,5-trihydro-1-pentene) were added, and the system inside was maintained at 35°C and a rate of stirring of 200 rpm. Then, tetrafluoroethylene was charged into the autoclave under pressure to a pressure of 0.90 MPa and then ethylene to a pressure of 0.94 MPa and, thereafter, 9.0 kg of di-n-propyl peroxydicarbonate was added to initiate the polymerization. Since the system inside pressure otherwise lowered with the progress of the polymerization, a mixed gas composed of tetrafluoroethylene, ethylene and hexafluoropropylene (= 48.5:43.0:8.5 mole%) was continuously fed to thereby maintain the system inside pressure at 1.0 MPa. Further, a total amount of 4.2 kg of perfluoro (1,1,5-trihydro-1-pentene) was also fed continuously, and stirring was continued for 28 hours. Then, after pressure release to atmospheric pressure, the reaction product was washed with water and dried to give 200 kg of a powder (fluorine-containing ethylenic polymer F-A). The results of analysis of this product are shown in Table 1.

Synthesis Example 2 Synthesis of fluorine-containing ethylenic polymer F-B

A fluorine-containing ethylenic polymer (F-B), whose composition is shown in Table 1, was obtained in the same manner as in Synthesis Example 1. The results of analysis of the powder obtained are shown in Table 1.

Synthesis Examples 3 and 4 Synthesis of fluorine-containing ethylenic polymers F-C and F-D

The powder obtained in Synthesis Example 1 was extruded using a single-screw extruder (model VS50-24; product of Tanabe Plastics Kikai Kabushiki Kaisha) at a cylinder temperature of 320°C, followed by grinding to give a powder (fluorine-containing ethylenic polymer F-C). The thus-obtained powder was stirred with distilled water in a tightly closed vessel at 150°C for 12 hours and, after cooling to room temperature, taken out and thoroughly dried to give a fluorine-containing ethylenic polymer (F-D). The results of analysis of these polymers are shown in Table 1.

Synthesis Example 5 Synthesis of fluorine-containing ethylenic polymer F-E

An autoclave was charged with 400 L of distilled water and, after thorough nitrogen substitution, 320 kg of perfluorocyclobutane, 80 kg of hexafluoropropylene, 19 kg of tetrafluoroethylene and 6 kg of vinylidene fluoride were added, and the system inside was maintained at 35°C and a rate of stirring of 180 rpm. Then, 5 kg of di-n-propyl peroxydicarbonate was added to initiate the polymerization. Since the system inside pressure otherwise lowered with the progress of the polymerization, a mixed gas composed of tetrafluoroethylene, vinylidene fluoride and hexafluoropropylene (= 50:40:10 mole%) was continuously fed to thereby maintain the system inside pressure at a constant level. Stirring was continued for 30 hours. Then, after pressure release to atmospheric pressure, the reaction product was washed with water and dried to give 200 kg of a powder (fluorine-containing ethylenic polymer F-E). The results of analysis of this product are shown in Table 1.

Synthesis Example 6 Synthesis of fluorine-containing ethylenic polymer F-F

An autoclave was charged with 340 L of distilled water and, after thorough nitrogen substitution, 300 kg of perfluorocyclobutane, 14.0 kg of perfluoropropyl vinyl ether (hereinafter referred to as "PPVE") and 2.5 L of methanol were added, and the system inside was maintained at 35°C and a rate of stirring of 180 rpm. Then, tetrafluoroethylene was charged into the autoclave under pressure to a pressure of 0.6 MPa and then 0.15 kg of di-n-propyl peroxydicarbonate was added to initiate the polymerization. Since the system inside pressure otherwise lowered with the progress of the polymerization, tetrafluoroethylene was continuously fed to thereby maintain the system inside pressure at 0.6 MPa. Further, a total amount of 16.5 kg of PPVE was also fed continuously, and stirring was continued for 19 hours. Then, after pressure release to atmospheric pressure, the reaction product was washed with water and dried to give 300 kg of a powder. A 30-kg portion of this powder was placed in a tray for exclusive use, the tray was placed in a box reaction oven and tightly closed and, after thorough nitrogen substitution, a mixed gas composed of fluorine gas and nitrogen gas (fluorine gas concentration 20% by volume) was passed through the oven at a flow rate of 1.0 L/minute for 3 hours. The oven inside was maintained at atmospheric pressure and a temperature of 180°C. After completion of the reaction, nitrogen gas alone was passed through the oven for about 2 hours for thorough substitution thereof for fluorine gas. Then, ammonia treatment was carried out by passing ammonia gas through the oven for 30 minutes at a flow rate of 2.0 L/minute. Thereafter, the heating was stopped, and nitrogen gas was passed through the oven for substitution thereof until the exit gas became neutral. Then, after confirmation that the oven inside was at room temperature, the system was opened to the atmospheric pressure to give a powder (fluorine-containing ethylenic polymer F-F). The results of analysis of this product are shown in Table 1.

Synthesis Example 7 Synthesis of fluorine-containing ethylenic polymer F-G

A 30-kg portion of the 300 kg of the powder obtained in Synthesis Example 6 after polymerization, washing with water and drying was placed in a tray for exclusive use, the tray was placed in a box reaction oven and tightly closed and, after thorough nitrogen substitution, a mixed gas composed of fluorine gas and nitrogen gas (fluorine gas concentration 20% by volume) was passed through the oven at a flow rate of 1.0 L/minute for 5 hours. The oven inside was maintained at atmospheric pressure and a temperature of 200°C. After completion of the reaction, the heating was discontinued and nitrogen gas alone was passed through the oven for about 2 hours for thorough fluorine gas purging. After nitrogen substitution and confirmation of the oven inside's being at room temperature, the oven was opened to the atmosphere to give a powder (fluorine-containing ethylenic polymer F-G). The results of analysis of this product are shown in Table 1.

[Table 1]

| | | Monomer unit composition (mole%) | | | | | | Carbonyl group | | Melting point (°C) | MFR (g/10 min); measurement temperature within ( ) |
|---|---|---|---|---|---|---|---|---|---|---|---|
| | | TFE | Et | HFP | VdF | PPVE | HF-Pa | Functional group species contained | Total number (groups/ $10^6$ main chain carbon atoms) | | |
| Synthesis Example 1 | F-A | 48.1 | 42.6 | 8,5 | - | - | 0.8 | -O-CO-O-, -COF | 311 | 197.3 | 33 (265°C) |
| Synthesis Example 2 | F-B | 54.1 | 44.2 | - | - | - | 1.7 | -O-CO-O-, -COF | 48 | 256.8 | 25 (297°C) |
| Synthesis Example 3 | F-C | 47.9 | 43.6 | 8.5 | - | - | 0.6 | -COF | 301 | 196.8 | 33 (265°C) |
| Synthesis Example 4 | F-D | 48.1 | 43.5 | 8.4 | - | - | 0.5 | -COF, -COOII | 298 | 197.6 | 34 (265°C) |
| Synthesis Example 5 | F-E | 51 | - | 9.7 | 39.3 | - | - | -O-CO-O-, -COF | 295 | 172.4 | 14.2 (230°C) |
| Synthesis Example 6 | F-F | 98.0 | - | - | - | 2.0 | - | -CONII$_g$ | 25 | 800.7 | 2.0 (372°C) |
| Synthesis Example 7 | F-G | 98.0 | - | - | - | 2.0 | - | none | 0 | 301.2 | 2.0 (372°C) |

In Table 1, TFE stands for tetrafluoroethylene, Et for ethylene, HFP for hexafluoropropylene, VdF for vinylidene fluoride, PPVE for perfluoropropyl vinyl ether, and HF-Pa for perfluoro (1,1,5-trihydro-1-pentene).

Example 1

The fluorine-containing ethylenic polymer F-A obtained in Synthesis Example 1 and carbon fibrils with an outside diameter of 0.015 $\mu$m, an inside diameter of 0.005 $\mu$m and an average length of 1.1 $\mu$m were mixed together in a mass ratio of 98:2 in a Henschel mixer (model FM75E; product of Mitsui Miike Machinery Co., Ltd.) to attain uniform dispersion, and this mixture was fed to a twin-screw extrude (model PCM-45; product of Ikegai Corporation) for mixed melting and mixing up, whereupon a fluororesin composition in the form of pellets was obtained. The extrusion conditions and the results of analysis of the fluororesin composition obtained are shown in Table 2.

Examples 2 to 9 and Comparative Examples 1 to 6

Resin compositions each in the form of pellets were obtained in the same manner as in Example 1 except that the raw materials and extrusion conditions specified in Table 1 and Table 2 were used. The raw materials, compositions and extrusion conditions used and the results of analysis of the resin compositions in pellet form are shown in Table 2.

[Table 2]

| | Composition of resin composition (mass%) | | | Extrusion temperature (°C) | | | | | | Number of revolutione (rpm) | Surface resistivity (Ω/□) | MFR (g/10 min) ; measurement temperature within ( ) | Fluidity | Tensile strength (MPa) | Tensile elongation (%) | Filler transfer to paper |
|---|---|---|---|---|---|---|---|---|---|---|---|---|---|---|---|---|
| | | | | C1 | C2 | C3 | C4 | A | D | | | | | | | |
| Example 1 | F-A 98 | CNT 2 | - | 180 | 230 | 240 | 240 | 240 | 240 | 100 | $0.8 \times 10^6$ | 28 (265°C) | 0.85 | 49 | 455 | ○ |
| Example 2 | F-A 96 | CNT 4 | - | 180 | 230 | 240 | 240 | 240 | 240 | 100 | about $10^4$ | 24 (265°C) | 0.73 | 45 | 421 | ○ |
| Example 3 | F - B 98 | CNT 2 | - | 200 | 240 | 260 | 270 | 270 | 280 | 80 | $0.7 \times 10^6$ | 20 (297°C) | 0.8 | 39 | 433 | - |
| Example 4 | F-C 98 | CNT 2 | - | 180 | 230 | 240 | 240 | 240 | 240 | 100 | $0.7 \times 10^6$ | 29 (265°C) | 0.88 | 48 | 438 | - |
| Example 5 | F-D 98 | CNT 2 | - | 180 | 230 | 240 | 240 | 240 | 240 | 100 | $0.5 \times 10^6$ | 26(265°C) | 0.76 | 47 | 441 | - |
| Examples 6 | F-E 98 | CNT 2 | - | 150 | 170 | 200 | 210 | 210 | 210 | 100 | $0.5 \times 10^6$ | 11.6(230°C) | 0.82 | 21 | 574 | - |
| Example 7 | F-F 98 | CNT 2 | - | 380 | 385 | 390 | 395 | 410 | 415 | 40 | $0.6 \times 10^6$ | 1.3 (372°C) | 0.65 | 32 | 375 | - |
| Example 8 | F-A 94 | CNT 1 | CB 5 | 180 | 230 | 240 | 240 | 240 | 240 | 100 | $0.3 \times 10^6$ | 28(265°C) | 0.85 | 46 | 406 | - |
| Example 9 | F-A 91 | CNT 1 | CF 8 | 180 | 230 | 240 | 240 | 240 | 240 | 100 | about $10^5$ | 22 (265°C) | 0.67 | 48 | 371 | - |
| Comparative Example 1 | F-A 98 | CB 2 | - | 180 | 230 | 240 | 240 | 240 | 240 | 100 | $10^{11} \sim 10^{10}$ | 29 (265°C) | 0.88 | 49 | 410 | Δ |
| Comparative Example 2 | F-A 90 | CB 10 | - | 180 | 230 | 240 | 240 | 240 | 240 | 100 | $10^7 - 10^8$ | 20 (265°C) | 0.61 | 39 | 275 | × |
| Comparative Example 3 | F-A 85 | CB 15 | - | 180 | 230 | 240 | 240 | 240 | 240 | 100 | $0.6 \sim 1 \times 10^6$ | 14(265°C) | 0.42 | 35 | 230 | × |

(continued)

| | Composition of resin composition (mass%) | | | Extrusion temperature (°C) | | | | | | Number of revolutione (rpm) | Surface resistivity (Ω/□) | MFR (g/10 min); measurement temperature within ( ) | Fluidity | Tensile strength (MPa) | Tensile elongation (%) | Filler transfer to paper |
|---|---|---|---|---|---|---|---|---|---|---|---|---|---|---|---|---|
| | | | | C1 | C2 | C3 | C4 | A | D | | | | | | | |
| Comparative Example 4 | F-B 85 | CB 15 | - | 200 | 240 | 260 | 270 | 270 | 280 | 80 | $0.6\sim0.8\times10^8$ | 3 (297°C) | 0.12 | 30 | 240 | - |
| Comparative Example 5 | F-F 86 | CB 15 | - | 380 | 385 | 390 | 395 | 410 | 415 | 40 | $0.8\sim0.8\times10^6$ | 0.32 (372°C) | 0.16 | 21 | 255 | - |
| Comparative Example 6 | F-C 98 | CNT 2 | - | 380 | 385 | 390 | 395 | 410 | 415 | 40 | $10^7\sim10^8$ | 1.4 (372°C) | 0.7 | 28 | 313 | - |

In Table 2, CNT stands for the same carbon fibrils as used in Example 1, CB for a commercial grade of acetylene black, and CF for carbon fibers (M-107T; product of Kureha Chemical Industry Co., Ltd.).

In Examples 8 and 9, carbon fibrils were used in combination with another conductive material, and the resulting compositions showed higher conductivity at lower carbon fibril addition levels as compared with the single use of carbon fibrils and were excellent in moldability and mechanical characteristics, hence they are preferred modes of embodiment of the present invention. On the contrary, for stably attaining a sufficient level of conductivity using acetylene black, an addition level of 15% by mass was required, as shown in Comparative Examples 1 to 3 and, as a result, the moldability and mechanical characteristics were sacrificed. In Comparative Example 6 in which the fluorine-containing polymer F-G, which is a carbonyl group-free one so referred to herein, was used, it was revealed that a satisfactory level of conductivity can hardly be obtained even when carbon fibrils are dispersed in such polymer.

Examples 10 to 12 and Comparative Example 7

Molding of multilayer tubes and evaluation thereof

Using a tube extrusion apparatus equipped with a multi-manifold die for two-material two-layer tubes, multilayer tubes with an outside diameter of 8 mm, an inside diameter of 6 mm, an outer layer thickness of 0.75 mm and an inner layer thickness of 0.25 mm were continuously molded so that the outer layer of each tube might be made of a polyamide resin (Nylon 12 LX9011, product of Daicel-Degussa Ltd.) and the inner layer might be made of the resin composition obtained in Example 1, 3 or 8 or Comparative Example 4 as specified in Table 3. The molding conditions and the results of evaluation of the multilayer tubes are shown in Table 3.

Table 3

| | Resin composition forming the most superficial layer | Extrusion temperature (°C) | | | | | | Surface resistivity ($\Omega/\square$) | Bonding strength (N/cm) |
|---|---|---|---|---|---|---|---|---|---|
| | | C1 | C2 | C3 | C4 | A | D | | |
| Example 10 | Example 1 | 180 | 240 | 260 | 260 | 260 | 260 | $0.6 \times 10^6$ | 45 |
| Example 11 | Example 3 | 220 | 260 | 280 | 280 | 280 | 280 | $0.6 \times 10^6$ | 40 |
| Example 12 | Example 8 | 180 | 240 | 260 | 260 | 260 | 260 | $0.2 \times 10^6$ | 43 |
| Comparative Example 7 | Comparative Example 4 | 220 | 260 | 280 | 280 | 280 | 280 | $2\sim10 \times 10^6$ | 16 |

The molding temperatures in the polyamide resin extruder were as follows: C1, 150°C; C2, 200°C; C3, 240°C; C4, 240°C; A (adaptor site), 240°C. The tube take-off speed was 8 m/minute.

From Table 3, it was revealed that multilayer tubes having good conductivity and bonding strength can be obtained in each of Examples 10 to 12 without any problem. In Comparative Example 7, however, the fluidity of the inner layer material was poor and only those tubes which were susceptible to delamination could be obtained. Attempts were made, but in vain, to further raise the cylinder temperatures and die (D) temperature for the inner layer side to improve with respect to that phenomenon. Thermal degradation of the polyamide resin was rather observed, hence the attempts were abandoned.

Examples 13 and Comparative Example 8

Molding of tubes for OA use and evaluation thereof

Using the resin compositions obtained in Example 7 (Example 13) and Comparative Example 6 (Comparative Example 8), tubes with 50 mm in diameter and 50 $\mu$m in thickness were continuously extruded by inner face sizing using an extruder equipped with a die and a core (= 74:50 mm in diameter). Rolls for evaluation were prepared by putting each of the tubes obtained over a heating roll coated with a 2-mm-thick silicon rubber layer with a hardness of 30 and allowing it to firmly adhere thereto so that such an uneven appearance as wrinkling or waviness might not result. The tube inner face was surface-treated with "Tetra H" (product of Junkosha Inc.), followed by application of an adhesive (Chemlok 607; product of Lord Far East Incorporated). Then, paper passage testing was carried out using each roll for evaluation and, thereafter, the surface resistivity was measured. The results are shown in Table 4.

Table 4

| | Resin composition | Extrusion temperature (°C) | | | | | | Surface resistivity (Ω/□) | |
|---|---|---|---|---|---|---|---|---|---|
| | | C1 | C2 | C3 | C4 | A | D | Before paper passage | After paper passage |
| Example 13 | Example 7 | 360 | 370 | 385 | 390 | 395 | 395 | $0.6 \times 10^6$ | $0.8 \times 10^6$ |
| Comparative Example 8 | Comparative Example 6 | 360 | 370 | 385 | 390 | 395 | 395 | $2 \sim 10 \times 10^7$ | $10^8 \sim 10^9$ |

As shown in Table 4, an increase in surface resistivity was observed after the paper passage test in Comparative Example 8 in which the fluorine-containing polymer F-G, which is a carbonyl group-free one so referred to herein, was used; surface observation confirmed the existence of traces suggesting that carbon fibrils in the vicinity of the surface had fallen off.

INDUSTRIAL APPLICABILITY

The fluororesin composition of the invention, which has the constitution described above, can give fluorine-containing molded articles excellent in electric conductivity and surface smoothness without allowing fillers to fall off.

**Claims**

1. A fluororesin composition comprising

    (a) a fluorine-containing ethylenic polymer (i) containing 3-3,000 carbonyl groups per $1 \times 10^6$ main chain carbon atoms; and
    (b) carbon fibrils (ii) representing hollow and fine carbon fibers having a tubular wall, in an amount of 0.3-20 wt.-% relative to the total solid matter of carbon fibrils and fluorine-containing ethylenic polymer.

2. The composition of claim 1, wherein the polymer (i) contains $\geq 40$ mol-% of units derived from tetrafluoroethylene (TFE).

3. The composition of claim 1 or 2, wherein polymer (i) comprises TFE and a monomer of the formula $CF_2=CF-Rf^1$, wherein $Rf^1$ is $-CF_3$ or $-ORf^2$ and $Rf^2$ is $C_{1-5}$-perfluoroalkyl.

4. The composition of claim 1, wherein the polymer (i) is a copolymer comprising

    (a) 20-90 mol-% of units derived from TFE,
    (b) 10-80 mol-% of units derived from ethylene, and
    (c) 0-70 mol-% of units derived from a monomer of the formula $CF_2=CF-Rf^1$, wherein $Rf^1$ is $-CF_3$ or $-ORf^2$ and $Rf^2$ is $C_{1-5}$-perfluoroalkyl.

5. The composition of claim 1, wherein the polymer (i) contains $\geq 15$ mol-% of units derived from vinylidene fluoride (VdF).

6. The composition of claim 5, wherein the polymer (i) is a copolymer comprising

    (d) 15-60 mol-% of units derived from VdF,
    (e) 35-80 mol-% of units derived from TFE, and
    (f) 5-30 mol-% of units derived from hexafluoropropylene (HFP).

7. The composition of any of claims 1-6, wherein the carbon fibrils comprise a fibrous matter having an outside diameter of 1-1,000 nm and a ratio (L/D) of the length (L) in the longitudinal direction to the outside diameter (D) of > 5.

8. The composition of any of claims 1-7, wherein the carbon fibrils comprise a carbon fibril flocculate.

9. The composition of claim 8, wherein the carbon fibril flocculate has an average particle diameter of 0.01-0.25 mm.

10. The composition of any of claims 1-9, which further comprises 3-50 wt.-% of inorganic filler, based on the total weight of the composition.

11. A molded article comprising the composition of any of claims 1-10.

12. The molded article of claim 11, which is a laminate having a fluorine-based layer comprising the composition of any of claims 1-10.

13. The molded article of claim 11 or 12, which is a piping tube for coatings, a transport tube for a drink and a liquid food, a chemical-transport tube or an auto fuel piping tube.


**Patentansprüche**

1. Fluorharzzusammensetzung, die umfasst

(a) ein fluorhaltiges ethylenisches Polymer (i), das 3 bis 3.000 Carbonylgruppen pro $1 \times 10^6$ Hauptketten-Kohlenstoffatomen enthält; und
(b) Kohlenstofffibrillen (ii), die hohle und feine Kohlenstofffasern mit einer röhrenförmigen Wand darstellen, in einer Menge von 0,3 bis 20 Gew.-%, bezogen auf den Gesamtfeststoffgehalt der Kohlenstofffibrillen und des fluorhaltigen ethylenischen Polymers.

2. Zusammensetzung gemäß Anspruch 1, wobei das Polymer (i) $\geq$ 40 mol% an Einheiten enthält, die von Tetrafluorethylen (TFE) abgeleitet sind.

3. Zusammensetzung gemäß Anspruch 1 oder 2, wobei das Polymer (i) TFE und ein Monomer der Formel $CF_2$=CF-$Rf^1$ enthält, wobei $Rf^1$ -$CF_3$ oder -$ORf^2$ ist und $Rf^2$ $C_{1-5}$-Perfluoralkyl ist.

4. Zusammensetzung gemäß Anspruch 1, wobei das Polymer (i) ein Polymer ist, das umfasst

(a) 20 bis 90 mol% an Einheiten, die von TFE abgeleitet sind,
(b) 10 bis 80 mol% an Einheiten, die von Ethylen abgeleitet sind, und
(c) 0 bis 70 mol% an Einheiten, die von einem Monomer der Formel $CF_2$=CF-$Rf^1$ abgeleitet sind, wobei $Rf^1$ -$CF_3$ oder -$ORf^2$ ist und $Rf^2$ $C_{1-5}$-Perfluoralkyl ist.

5. Zusammensetzung gemäß Anspruch 1, wobei das Polymer (i) $\geq$ 15 mol% an Einheiten enthält, die von Vinylidenfluorid (VdF) abgeleitet sind.

6. Zusammensetzung gemäß Anspruch 5, wobei das Polymer (i) ein Copolymer ist, das umfasst

(d) 15 bis 60 mol% an Einheiten, die von VdF abgeleitet sind,
(e) 35 bis 80 mol% an Einheiten, die von TFE abgeleitet sind, und
(f) 5 bis 30 mol% an Einheiten, die von Hexafluorpropylen (HFP) abgeleitet sind.

7. Zusammensetzung gemäß einem der Ansprüche 1 bis 6, wobei die Kohlenstofffibrillen ein faserförmiges Material mit einem äußeren Durchmesser von 1 bis 1.000 nm und einem Verhältnis (L/D) der Länge (L) in der Längsrichtung zu dem äußeren Durchmesser (D) von > 5 enthalten.

8. Zusammensetzung gemäß einem der Ansprüche 1 bis 7, wobei die Kohlenstofffibrillen Kohlenstofffibrillenflocken umfassen.

9. Zusammensetzung gemäß Anspruch 8, wobei die Kohlenstofffibrillenflocken einen durchschnittlichen Partikeldurchmesser von 0,01 bis 0,25 mm haben.

**10.** Zusammensetzung gemäß einem der Ansprüche 1 bis 9, die weiterhin 3 bis 50 Gew.-% eines anorganischen Füllstoffes, bezogen auf das Gesamtgewicht der Zusammensetzung, umfasst.

**11.** Formkörper, der die Zusammensetzung gemäß einem der Ansprüche 1 bis 10 umfasst.

**12.** Formkörper gemäß Anspruch 11, der ein Laminat mit einer fluorbasierten Schicht ist, die die Zusammensetzung gemäß einem der Ansprüche 1 bis 10 umfasst.

**13.** Formkörper gemäß Anspruch 11 oder 12, der ein Rohreinsatz für Beschichtungen, eine Transportröhre für ein Getränk und ein flüssiges Nahrungsmittel, eine chemische Transportröhre oder ein Autokraftstoff-Rohreinsatz ist.

**Revendications**

**1.** Composition de résine fluorée comprenant

(a) un polymère (i) éthylénique contenant du fluor contenant 3 à 3 000 groupes carbonyle pour $1 \times 10^6$ atomes de carbone de chaîne principale ; et
(b) des fibrilles de carbone (ii) représentant des fibres de carbone creuses et fines ayant une paroi tubulaire, dans une quantité de 0,3 à 20% en poids par rapport à la matière solide totale de fibrilles de carbone et de polymère éthylénique contenant du fluor.

**2.** Composition selon la revendication 1, dans laquelle le polymère (i) contient ≥ 40% en moles d'unités dérivées du tétrafluoroéthylène (TFE).

**3.** Composition selon la revendication 1 ou 2, dans laquelle le polymère (i) comprend du TFE et un monomère de la formule $CF_2=CF-Rf^1$, dans laquelle $Rf^1$ est $-CF_3$ ou $-ORf^2$ et $Rf^2$ est un perfluoroalkyle en $C_1$-$C_5$.

**4.** Composition selon la revendication 1, dans laquelle le polymère (i) est un copolymère comprenant

(a) 20 à 90% en moles d'unités dérivées du TFE,
(b) 10 à 80% en moles d'unités dérivées de l'éthylène, et
(c) 0 à 70% en moles d'unités dérivées d'un monomère de la formule $CF_2=CF-Rf^1$, dans laquelle $Rf^1$ est $-CF_3$ ou $-ORf^2$ et $Rf^2$ est un perfluoroalkyle en $C_1$-$C_5$.

**5.** Composition selon la revendication 1, dans laquelle le polymère (i) contient ≥ 15% en moles d'unités dérivées du fluorure de vinylidène (VdF).

**6.** Composition selon la revendication 5, dans laquelle le polymère (i) est un copolymère comprenant (d) 15 à 60% en moles d'unités dérivées du VdF,

(e) 35 à 80% en moles d'unités dérivées du TFE, et
(f) 5 à 30% en moles d'unités dérivées de l'hexafluoropropylène (HFP).

**7.** Composition selon l'une quelconque des revendications 1 à 6, dans laquelle les fibrilles de carbone comprennent une matière fibreuse ayant un diamètre extérieur de 1 à 1 000 nm et un rapport (L/D) de la longueur (L) dans le sens longitudinal sur le diamètre extérieur (D) de > 5.

**8.** Composition selon l'une quelconque des revendications 1 à 7, dans laquelle les fibrilles de carbone comprennent un floculat de fibrilles de carbone.

**9.** Composition selon la revendication 8, dans laquelle le floculat de fibrilles de carbone a un diamètre moyen de particules de 0,01 à 0,25 mm.

**10.** Composition selon l'une quelconque des revendications 1 à 9, qui comprend en outre 3 à 50% en poids d'une charge inorganique, sur la base du poids total de la composition.

**11.** Article moulé comprenant la composition selon l'une quelconque des revendications 1 à 10.

12. Article moulé selon la revendication 11, qui est un stratifié ayant une couche à base de fluor comprenant la composition selon l'une quelconque des revendications 1 à 10.

13. Article moulé selon la revendication 11 ou 12, qui est un tube de canalisation pour revêtements, un tube de transport pour une boisson et un aliment liquide, un tube de transport de produit chimique ou un tube de canalisation pour carburant auto.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1086962 A
- EP 1270209 A
- WO 0196100 A
- EP 1223030 A

- US 4663230 A
- JP H03174018 B
- JP H0364606 B
- JP H0377288 B

**Non-patent literature cited in the description**

- **HISASHI YAMADA ; MICHIO NARITA.** Conductive carbon black <Ketjen black EC> and rendering resins therewith. Plastics Age Co., Ltd, 1988, vol. 4, 164-170